# FASCICULE DE BREVET EUROPEEN

(11) **EP 1 911 505 B1**
(45) Date de publication et mention de la délivrance du brevet: **06.07.2011**
(21) Numéro de dépôt: 07291139.9
(22) Date de dépôt: 25.09.2007
(51) Int. Cl.: B01D 53/14

(54) **Procédé de capture du CO2 avec intégration thermique du régénérateur**
Vefahren zur Entfernung von CO2 mit einem thermisch integriertem Regenerator
Process for the removal of CO2 including a thermally integrated regenerator

(30) Priorité: 11.10.2006 FR 0608971
(43) Date de publication de la demande: 16.04.2008
(73) Titulaire: IFP Energies nouvelles, 92852 Rueil-Malmaison Cedex (FR); Alstom Technology Ltd, 5400 Baden (CH)
(72) Inventeur: Burkhardt, Thorsten, 69005 Lyon (FR); Bouillon, Pierre-Antoine, 69007 Lyon (FR); Magdelenat, Jean-Claude, 90000 Belfort (FR)

(56) Documents cités:
- EP-A1- 0 738 536
- WO-A-00/48709
- WO-A-98/04339
- FR-A1- 2 760 653
- FR-A1- 2 848 121
- GB-A- 2 062 597
- US-A- 4 035 166
- US-A- 4 522 638

## Description

La présente invention concerne le domaine de la décarbonatation d'un effluent gazeux au moyen d'une solution absorbante.

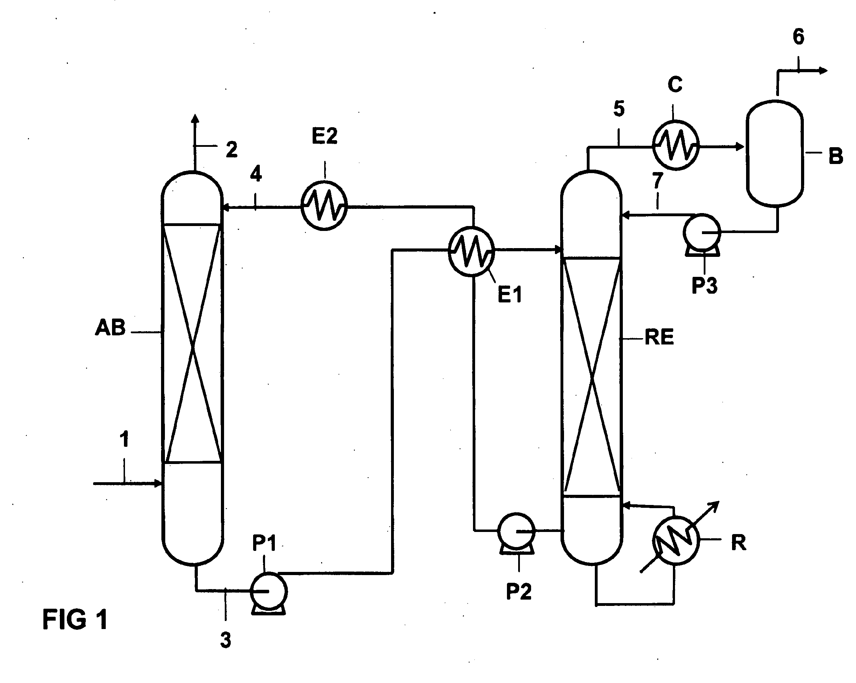

Le procédé schématisé par la figure 1 et décrit en détail ci-après représente un procédé pour extraire le dioxyde de carbone (CO₂) contenu dans des fumées de combustion. Ce procédé met en oeuvre une solution absorbant le CO₂.

La régénération de la solution absorbante est généralement réalisée par mise en contact de la solution avec de la vapeur d'eau. L'énergie thermique nécessaire à la régénération permet de vaporiser l'eau afin de casser l'énergie de liaison entre le CO₂ absorbé et la solution absorbante et d'évacuer le CO₂ par entraînement par la vapeur d'eau. Cette régénération de la solution absorbante chargée en CO₂ est coûteuse sur le plan de la consommation d'énergie.

Par ailleurs, le reflux généré par condensation partielle de l'effluent gazeux obtenu en tête de la colonne de régénération permet de récupérer l'eau vaporisée. Il est intéressant de refroidir l'effluent en tête de colonne jusqu'à une température relativement basse afin, d'une part, de maximiser la quantité d'eau recyclée dans la colonne et, d'autre part, de produire un flux de CO₂ appauvri en eau. En effet, plus la quantité d'eau recyclée dans la colonne est importante, plus la régénération est efficace. De plus, le fait que le flux de CO₂ soit appauvri en eau permet d'effectuer sans problèmes des traitements ultérieurs tels que la compression ou la liquéfaction. Cependant, le fait de refroidir à une température relativement basse génère un reflux à basse température qui impose un apport supplémentaire de calorie par le rebouilleur dans la colonne de régénération.

Cette consommation d'énergie par la colonne de régénération représente un inconvénient important. En effet, si la chaleur nécessaire pour régénérer la solution absorbante est obtenue par combustion d'un combustible fossile, on peut être amené à produire une quantité supplémentaire de CO₂ qui enlèverait beaucoup d'intérêt à l'extraction de CO₂ dans les fumées à traiter.

La présente invention propose de refroidir l'effluent en tête de colonne de régénération à une température relativement basse, par exemple de l'ordre de 10°C à 50°C, tout en minimisant l'apport en énergie exigée pour le bon fonctionnement de la régénération de la solution absorbante afin d'obtenir, d'une part, un flux riche en CO₂ et appauvri en eau et, d'autre part, un reflux liquide suffisamment conséquent pour le bon fonctionnement de la colonne de régénération.

Les documents GB-A-2062597, FR-A-2760653, EP-A-1408102, FR-A-2814378, FR-A-2848121, US-A-4035166 et US-A-4522638 décrivent des procédés d'absorption de composés acides contenus dans un gaz par un solvant. Ces documents proposent différents moyens pour augmenter la température de reflux introduit en tête de la colonne de régénération.

Pour attendre cet objectif, l'invention propose d'augmenter, par un moyen différent, la température du reflux introduit en tête de la colonne de régénération.

De manière générale, l'invention concerne un procédé de capture du CO₂ contenu dans des fumées de combustion dans lequel on effectue, en combinaison au moins les étapes suivantes :
a) on brûle un combustible en produisant des fumées de combustion,
b) on met en contact les fumées avec une solution absorbante de manière à produire des fumées appauvries en CO₂ et une solution chargée en CO₂,
c) on régénère la solution chargée en CO₂, dans une colonne de régénération thermique, de manière à produire une solution absorbante régénérée et un effluent gazeux riche en CO₂,
d) on refroidit ledit effluent gazeux riche en CO₂ de manière à obtenir une fraction gazeuse enrichie en CO₂ qui est évacuée, et une fraction liquide qui est introduite en tête de la colonne de régénération à titre de reflux.

Le procédé selon l'invention est caractérisé en ce que, à l'étape d), on effectue l'opération suivante:
i) on réchauffe ladite fraction liquide par échange de chaleur avec lesdites fumées de combustion.

Selon l'invention, on peut effectuer, en outre, au moins l'une des opérations suivantes:
ii) on refroidit ledit effluent gazeux à une température intermédiaire de manière à produire un flux liquide *et un flux gazeux, puis on sous-refroidit le flux gazeux de manière à produire ladite fraction gazeuse et ladite fraction liquide, ledit flux liquide et ladite fraction liquide étant rassemblés puis introduits en tête de la colonne de régénération à titre de reflux,
iii) on réchauffe ladite fraction liquide par échange de chaleur avec ledit effluent gazeux.

Selon l'invention, à l'étape d), on peut refroidir ledit effluent gazeux à une température comprise entre 10°C et 50°C. Alternativement, à l'opération i), on peut refroidir ledit effluent gazeux à la température intermédiaire comprise entre 40°C et 80°C et on peut sous-refroidit le flux gazeux à une température comprise entre 10°C et 50°C.

On peut apporter de la chaleur en fond de la colonne de régénération par un rebouilleur.

La solution absorbante peut comporter de l'eau et des amines.

Avant l'étape b), on peut refroidir les fumées de combustion par échange de chaleur indirect avec de l'eau de mer.

Les fumées de combustion peuvent être produites par une centrale thermique de production d'électricité, un haut-fourneau d'aciérie, un four de cimenterie ou un four de verrerie.

D'autres caractéristiques et avantagea de l'invention seront mieux compris et apparaîtront clairement à la lecture de la description faite ci-après en se référant aux dessins parmi lesquels :
- la figure 1 présente un procédé de capture de CO₂ contenu dans des fumées,
- les figures 4 5, 7 et 8 présentent différents modes de réalisation de l'invention.

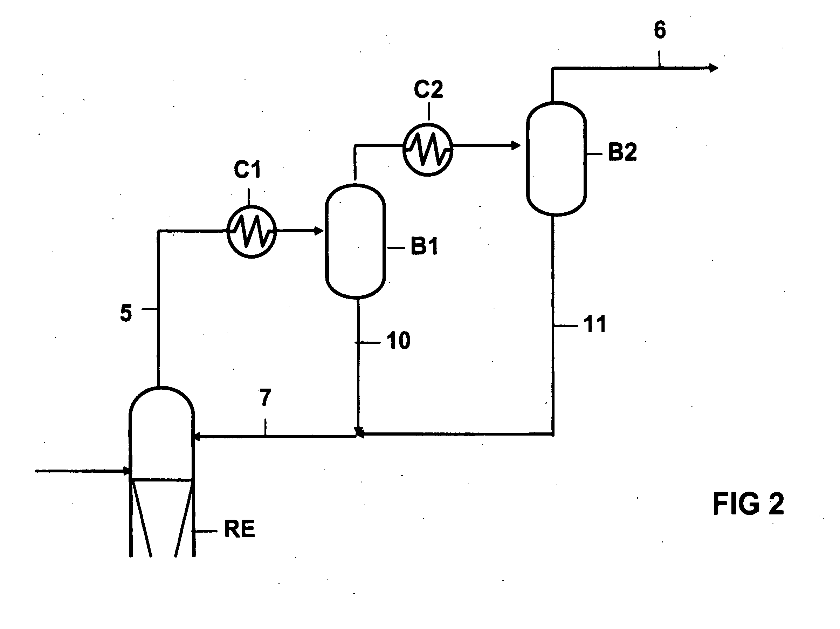

Les modes de réalisation des figures 2, 3 et 6 ne sont pas couverts par l'invention.

Sur la figure 1, les fumées de combustion arrivant par le conduit 1 sont introduites dans la colonne d'absorption AB pour être mises en contact avec la solution absorbante arrivant par le conduit 4. Dans AB, la solution absorbe le CO₂ contenu dans les fumées de combustion. La solution absorbante chargée en CO₂ est évacuée en fond de la colonne AB par le conduit 3. Les fumées appauvries en CO₂ sont évacuées en tête de la colonne AB par le conduit 2.

La solution absorbante peut être à caractère chimique, c'est-à-dire impliquant une réaction chimique avec le CO₂ lors de l'absorption. Dans ce cas la solution absorbante peut comporter des alcanolamines, par exemple de la MEA (méthyléthanolamine), DEA (diéthanolamine), MDEA (diméthyléthanolamine), DIPA (diisopropylamine), DGA (diglycolamine), des diamines, de la pipérazine, de l'hydroxyéthyl piperazine. La solution absorbante peut agir par absorption physique, c'est-à-dire par affinité physique entre la solution et le CO₂. Dans ce cas, la solution peut comporter, par exemple, du sulfolane, du méthanol, de la N-formyl morpholine, de l'acétyl morpholine, du carbonate de propylène, du diméthyl éther polyétylène glycol ou de la N-Méthyl pyrrolidone.

Les fumées de combustion peuvent provenir d'une centrale de production d'électricité, utilisant un combustible fossile, un haut-fourneau d'aciérie, un four de cimenterie ou de verrerie, etc. La composition typique d'une fumée de combustion produite par une centrale électrique au charbon, en volume, est de 75% d'azote, 15% de CO₂, 5% d'oxygène et 5% d'eau. De manière générale, la teneur en CO₂ d'une fumée de combustion peut varier entre 3 % et 50 %. La température de ces fumées peut être comprise entre 20°C et 250°C, La pression peut quant à elle varier entre 1 et 40 bars absolus.
La colonne AB peut être tout type d'équipement permettant de mettre en contact un gaz et un liquide. Par exemple AB peut être une colonne à plateaux, une colonne à garnissage, vrac ou structuré, une colonne pulsée, ou une succession de mélangeurs et de décanteurs disposés en série.
Avant d'être introduit dans AB, la température et la pression des fumées de combustion peuvent être modifiées de manière à opérer l'absorbtion dans les conditions les plus intéressantes. Par exemple, on peut refroidir les fumées de combustion par échange de chaleur indirect avec l'eau de mer.
La solution chargée en CO₂ évacuée de AB par le conduit 3 est reprise par la pompe P1, est chauffée dans l'échangeur de chaleur indirect E1, c'est-à-dire un échange de chaleur entre deux fluides, sans transfert de matière. Puis, la solution chauffée est introduite dans la colonne de régénération RE.
La colonne de régénération permet de séparer le CO₂ de la solution absorbante. Le rebouilleur R disposé au fond de la colonne RE permet de vaporiser de l'eau afin de casser l'énergie de liaison entre le CO₂ absorbé et la solution absorbante, et d'évacuer par effet d'entraînement le CO₂ de la solution absorbante. La solution absorbante régénérée, c'est-à-dire appauvrie en CO₂, est évacuée en fond de RE. Un effluent gazeux comportant le CO₂ libéré sous forme gazeuse dans RE est évacué en tête de la colonne RE par le conduit 5. Cet effluent gazeux comporte, en outre, de l'eau et éventuellement des traces d'autres composés.
La solution absorbante régénérée évacuée en fond de RE, est reprise par la pompe P2, traverse les échangeurs de chaleur E1 et E2, puis est réintroduite dans la colonne AB par le conduit 4. Dans l'échangeur E1, la solution absorbante régénérée chauffe la solution absorbante chargée en CO₂ issue en fond de AB. L'échangeur E2 permet de modifier, en général par refroidissement, la température de la solution absorbante régénérée avant introduction dans AB.
L'effluent gazeux évacué par le conduit 5 est introduit dans le condenseur C, c'est-à-dire un échangeur de chaleur indirect utilisant un fluide réfrigérant, pour être refroidi jusqu'à condensation partielle de l'eau contenu dans l'effluent. L'effluent partiellement condensé est introduit dans le ballon de séparation B. La fraction gazeuse riche en CO₂ issue en tête de B est évacuée par le conduit 6. La fraction liquide obtenue en fond du ballon B est pompée par la pompe P3 puis réinjectée en tête de RE par le conduit 7 à titre de reflux. Cette fraction liquide comporte principalement de l'eau, par exemple plus de 95% en volume, des traces de CO₂ et éventuellement des traces de solution absorbante.

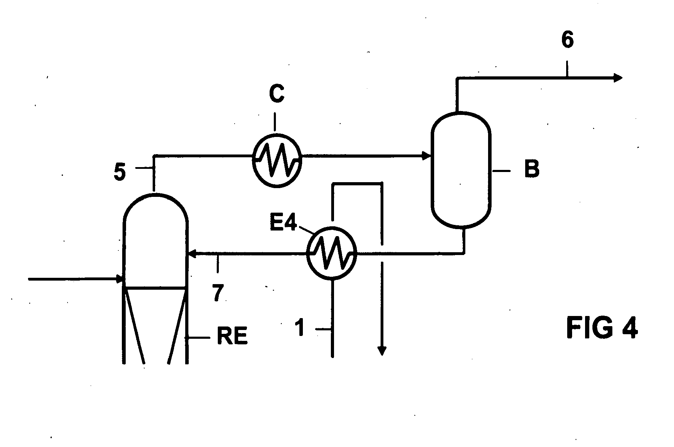

Selon l'invention, on opère le procédé décrit en référence à la figure 1 de manière à produire par le conduit 6 une fraction gazeuse riche en CO₂, par exemple comportant plus de 90% volume de CO₂, de préférence 95%, voir 98%. En effet, les traitements ultérieurs, tels que la compression, la liquéfaction ou le transport, de cette fraction riche en CO₂ nécessitent une haute concentration en CO₂ et on réduit le coût du traitement du CO₂ en limitant la présence d'impuretés. Pour obtenir une haute concentration en CO₂, on refroidit l'effluent gazeux obtenu en tête de RE à une température relativement basse, par exemple comprise entre 10°C et 50°C, de préférence entre 15°C et 40°C. L'eau condensée par refroidissement est utilisée en tant que reflux dans la colonne de régénération. De ce fait, le refroidissement impose un apport de chaleur plus conséquent au niveau de R. Pour minimiser l'apport de chaleur au niveau de R, la présente invention propose d'augmenter la température du reflux en tête de la colonne RE tout en effectuant un refroidissement à basse température de l'effluent produit en tête de RE, notamment en mettant en oeuvre l'une des dispositions illustrées par les figures 4, 5, 7 et 8. Il est possible d'augmenter la température du reflux qui comporte généralement plus de 95% d'eau, sans vaporiser l'eau du reflux. En effet, la température de refroidissement est généralement bien inférieure à la température du point de bulle de l'eau à la pression partielle de l'eau considérée.

Les figures 2 à 8 présentent différentes manières de produire le reflux en tête de la colonne RE. Sur les figures 2 à 8, les références identiques à celles de la figure 1 désignent les mêmes éléments.

Selon l'invention, on met en oeuvre un procédé de capture de CO₂ selon la figure 1 intégrant au moins l'une des options décrites en référence aux figures 4, 5, 7 et 8.

En référence à la figure 2, l'effluent gazeux issu en tête de la colonne de régénération par le conduit 5 est refroidi à une température intermédiaire dans l'échangeur de chaleur C1 de manière à condenser une partie de l'eau contenue dans l'effluent. Par exemple, la température intermédiaire est comprise entre 40°C et 80°C. Puis l'effluent est introduit dans le ballon de séparation B1 pour séparer le condensat de la fraction gazeuse. La fraction gazeuse obtenue en tête de B1 est refroidie par échange de chaleur dans l'échangeur C2 de manière à être partiellement condensée à une température finale, puis est introduite dans le ballon de séparation B2. La fraction gazeuse obtenue en tête de B2 constitue le flux riche en CO₂ évacué par le conduit 6. Les condensats évacués respectivement par les conduits 10 et 11 des ballons B1 et B2 sont réintroduits par le conduit 7 dans la colonne RE à titre de reflux. Ainsi, le fait de produire une portion du reflux dans le ballon B1 à une température intermédiaire supérieure à la température finale conduit à obtenir un reflux plus chaud, comparé à la solution classique où la totalité de l'effluent est refroidie à la température finale. En conséquence, l'énergie apportée par le rebouilleur R est donc plus faible puisque la température du reflux est plus élevée (moins de chaleur est nécessaire pour vaporiser l'eau contenue dans le reflux). La mise en oeuvre du schéma de la figure 2 permet d'économiser sur la consommation énergétique du rebouilleur R, sans apport complémentaire d'énergie.
La figure 2 représente un cas avec un refroidissement en deux étapes. On peut envisager un refroidissement en trois ou plus de trois étapes.

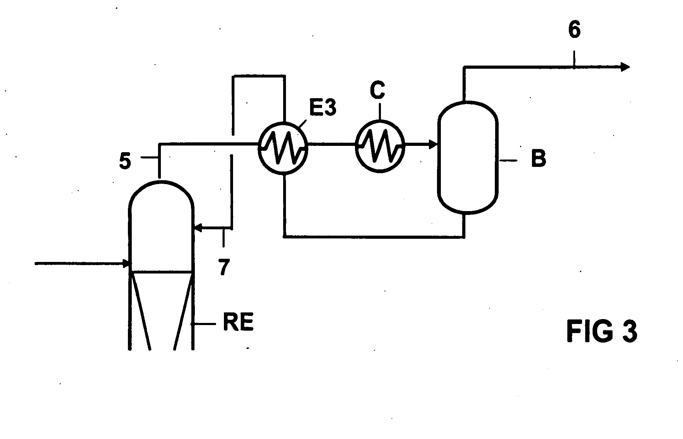

En référence à la figure 3, l'effluent gazeux produit en tête de colonne RE est introduit par le conduit 5 dans l'échangeur de chaleur E3 pour être refroidi, puis dans le condenseur C pour être sous-refroidi jusqu'à condensation partielle. Dans le ballon B, la fraction gazeuse est séparée de la fraction liquide. La fraction gazeuse est évacuée par le conduit 6. La fraction liquide est introduite dans l'échangeur de chaleur E3 avant d'être introduite dans la colonne de régénération RE à titre de reflux. Dans l'échangeur E3, le reflux introduit dans RE est réchauffé par échange de chaleur indirecte avec l'effluent issu en tête de RE. Cela permet, d'une part, d'économiser de l'énergie pour refroidir l'effluent issu en tête de RE et, d'autre part, d'économiser de l'énergie au niveau du rebouilleur RE, puisque le reflux est réchauffé dans E3 avant introduction dans RE. La mise en oeuvre du schéma de la figure 3 permet d'économiser sur la consommation énergétique du rebouilleur R et du condenseur C, sans apport complémentaire d'énergie.

En référence à la figure 4, l'effluent produit en tête de colonne RE est partiellement condensé par échange de chaleur dans C, puis est partagé en une fraction liquide et une fraction gazeuse dans B. La fraction gazeuse est évacuée de B par le conduit 6. La fraction liquide issue de B est réchauffée dans l'échangeur E4 par échange de chaleur indirecte avec les fumées de combustion arrivant par le conduit 1. Puis la fraction liquide réchauffée est introduite par le conduit 7 dans la colonne RE à titre de reflux. Après passage dans E4, les fumées de combustion refroidies sont introduites dans la colonne d'absorption. Cette solution est intéressante lorsque les fumées de combustion sont à une température supérieure à la température de la fraction liquide évacuée en fond de B. En conséquence, l'énergie apportée par le rebouilleur R est donc plus faible puisque la température du reflux est plus élevée et l'absorption du CO₂ dans AB est favorisée par la baisse de température des fumées à l'entrée de AB. La mise en oeuvre du schéma de la figure 4 permet d'économiser sur la consommation énergétique du rebouilleur R et du condenseur C, sans autre complément d'énergie. Le procédé de capture selon l'invention est énergétiquement plus économe que les procédés de l'art antérieur.
De plus, le procédé schématisé par la figure 4 permet de baisser la température des fumées, ce qui améliore l'absorption du CO₂ par la solution absorbante.

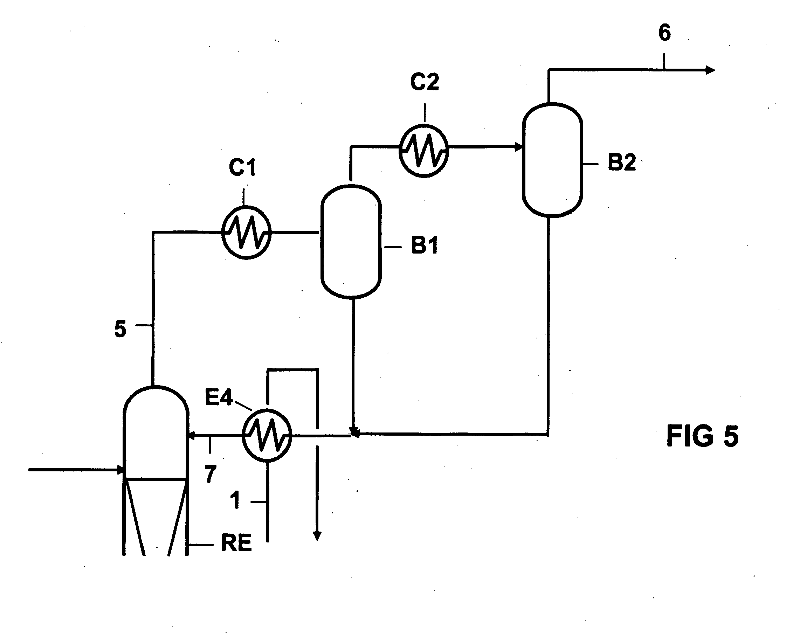

La figure 5 propose de combiner les deux modes de réalisation décrits en référence aux figures 2 et 4.
En référence à la figure 5, l'effluent gazeux obtenu en tête de RE est refroidi à une température intermédiaire dans C1, les condensats produits lors de ce refroidissement étant récupérés en fond de B1. La fraction gazeuse évacuée en tête de B1 est refroidie à une température finale par C2, les condensats produits lors de ce deuxième refroidissement étant récupérés en fond de B2. Les condensats sont rassemblés, réchauffés dans E4 par échange de chaleur avec les fumées de combustion arrivant par le conduit 1, puis introduits dans la colonne RE à titre de reflux. La fraction gazeuse obtenue en tête de B2 constitue le flux riche en CO₂ évacué par le conduit 6.

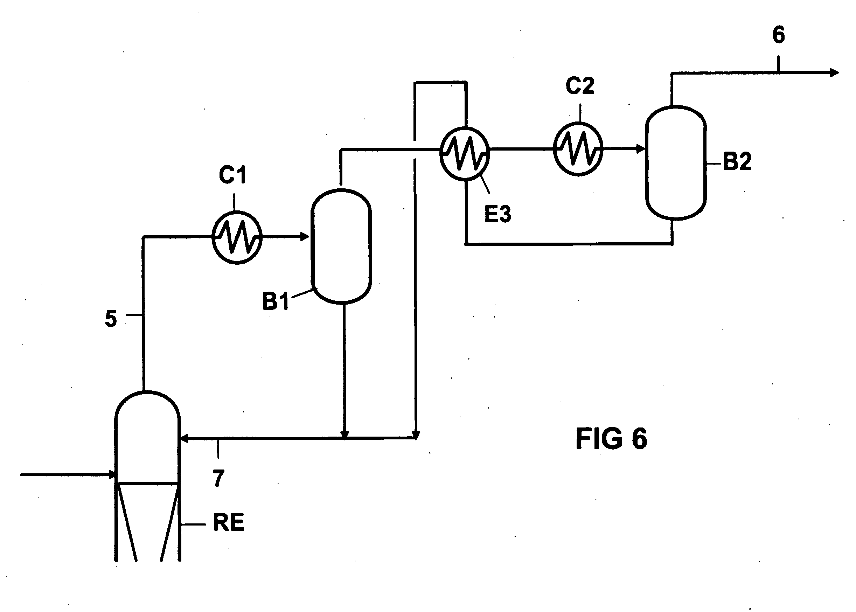

La figure 6 propose de combiner les deux modes de réalisation décrits en référence aux figures 2 et 3.
En référence à la figure 6, l'effluent gazeux obtenu en tête de RE est refroidi à une température intermédiaire dans C1, les condensats produits lors de ce refroidissement étant récupérés en fond de B1. La fraction gazeuse évacuée en tête de B1 est refroidie à une température finale par E3 et C2, les condensats produits lors de ce deuxième refroidissement étant récupérés en fond de B2. Les condensats récupérés en fond de B2 sont réchauffés dans E3 par échange de chaleur indirect avec la fraction gazeuse produite en tête de B1. Alternativement, les condensats récupérés en fond de B2 peuvent être réchauffés par échange de chaleur indirect avec l'effluent évacué en tête de RE par le conduit 5. Puis, ces condensats réchauffés sont réunis avec les condensats récupérés en fond de B1 afin d'être réintroduits dans la colonne RE à titre de reflux par le conduit 7. La fraction gazeuse obtenue en tête de B2 constitue le flux riche en CO₂ évacué par le conduit 6.

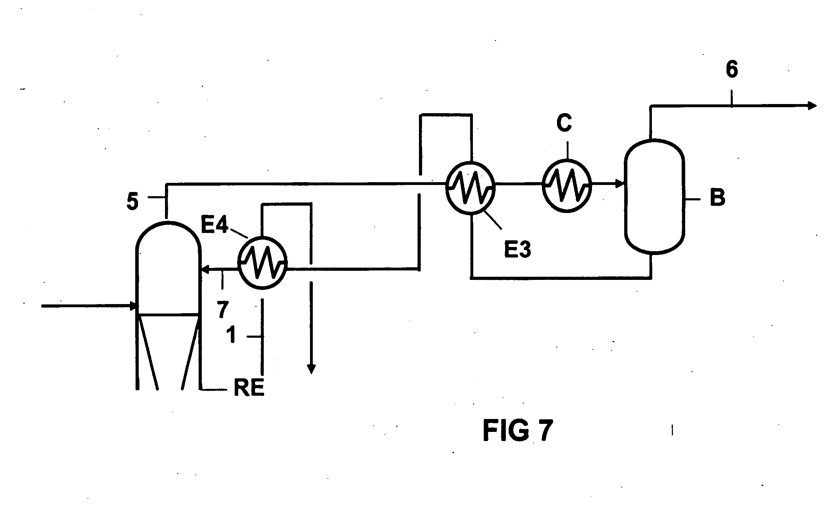

La figure 7 propose de combiner les deux modes de réalisation décrits en référence aux figures 3 et 4.
En référence à la figure 7, l'effluent gazeux produit en tête de colonne RE est introduit par le conduit 5 dans l'échangeur de chaleur E3 pour être refroidi puis dans le condenseur C pour être sous-refroidi jusqu'à condensation partielle. Dans le ballon B, la fraction gazeuse est séparée de la fraction liquide. La fraction gazeuse, évacuée par le conduit 6, constitue la fraction riche en CO₂. La fraction liquide est introduite dans l'échangeur de chaleur E3, puis dans l'échangeur de chaleur E4, avant d'être introduite dans la colonne de régénération RE à titre de reflux. Dans l'échangeur E3, le reflux introduit dans RE est réchauffé par échange de chaleur indirecte avec l'effluent issu en tête de RE. Dans l'échangeur E4, le reflux introduit dans RE est réchauffé par échange de chaleur indirect avec les fumées de combustion circulant dans le conduit 1.

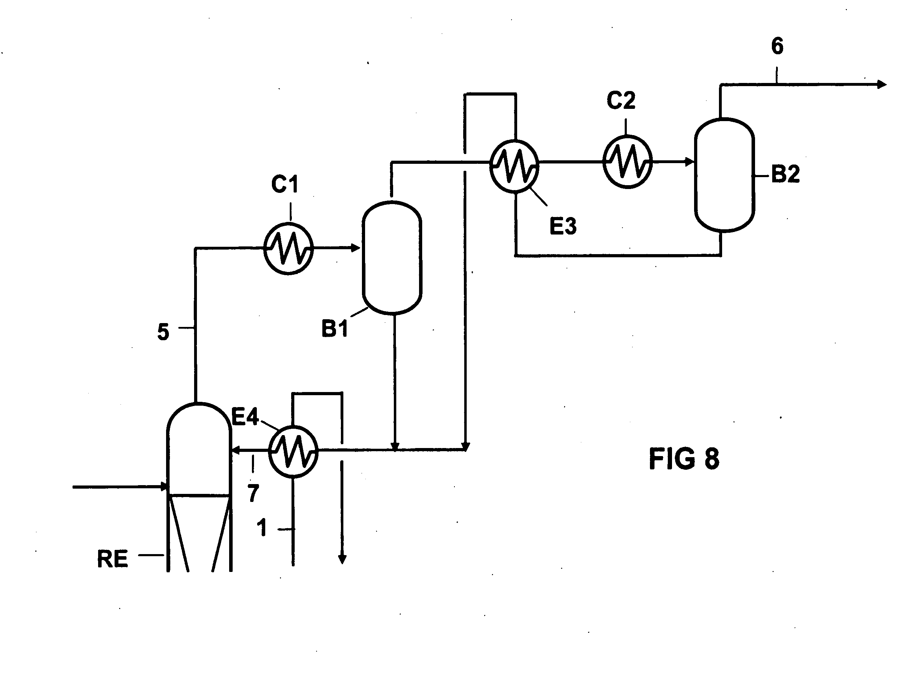

La figure 8 propose de combiner les modes de réalisation décrits en référence aux figures 2, 3 et 4.

En référence à la figure 8, l'effluent gazeux obtenu en tête de RE est refroidi à une température intermédiaire dans C1, les condensats produits lors de ce refroidissement étant récupérés en fond de B1. La fraction gazeuse évacuée en tête de B1 est refroidie à une température finale par E3 et C2, les condensats produits lors de ce deuxième refroidissement étant récupérés en fond de B2. Les condensats récupérés en fond de B2 sont réchauffés dans E3 par échange de chaleur avec la fraction gazeuse produite en tête de B1. Puis, ces condensats réchauffés sont réunis avec les condensats récupérés en fond de B1. Ce mélange de condensats est chauffé dans l'échangeur E4, afin d'être réintroduits dans la colonne RE à titre de reflux par le conduit 7. Dans l'échangeur E4, le reflux introduit dans RE est réchauffé par échange de chaleur indirect avec les fumées de combustion circulant dans le conduit 1. La fraction gazeuse obtenue en tête de B2 constitue le flux riche en CO₂ évacué par le conduit 6.

Sans sortir du cadre de l'invention, on peut envisager d'autres modes de réalisation basés sur la combinaison de différentes solutions présentées par les figures 4, 5, 7 et 8.

L'exemple numérique présenté ci-après permet d'illustrer la présente invention.

On considère un procédé de capture du CO₂ sur le modèle du procédé décrit en référence à la figure 1 présentant les caractéristiques suivantes :
- fumées issues d'une centrale électrique au charbon comportant 7% d'eau, 13,5% de CO₂, 75% d'azote et 4,5% d'oxygène, disponibles à 30°C et 103,3kPa abs.
- taux de capture du CO₂ contenu dans des fumées : 90%
- solution absorbante aqueuse comportant 30% poids de MEA
- le rebouilleur R fonctionne à 1,8 bars abs, avec une température de rebouillage de 118°C, une température en tête de 105°C,
- taux de charge de l'amine dans la solution régénérée de 0,24 mol CO2 / mol MEA

Le tableau compare les quantités de chaleur requises par la colonne RE pour les procédés décrits en référence aux figures 1, 2, 3, 4, 6 et 8. De plus, dans le tableau, on peut constater l'influence des différents schémas selon l'invention sur la température du reflux généré en tête de la colonne RE : la présente invention permet de diminuer la consommation énergétique du rebouilleur R, tout en maintenant les performances de la régénération de la solution absorbante.

| Type de procédé | Fig. 1 | Fig. 2 | Fig. 3 | Fig. 4 | Fig. 6 | Fig. 8 |
|---|---|---|---|---|---|---|
| Température du reflux (°C) | 25 | 45,35 | 77,46 | 81,6 | 90,9 | 114 |
| Chaleur apportée par le rebouilleur (MWth) | 405,5 | 389,6 | 386,1 | 386 | 385,5 | 380,2 |
| Consommation énergétique du rebouilleur par tonne de CO2 extrait (GJ/t de CO2 extrait) de CO2 extrait (GJ/t de CO2 extrait) | 3,47 | 3,34 | 3,315 | 3,31 | 3,305 | 3,26 |

## Revendications

1. Procédé de capture du CO₂ contenu dans des fumées de combustion dans lequel on effectue, en combinaison au moins les étapes suivantes :
a) on brûle un combustible en produisant des fumées de combustion,
b) on met en contact (AB) les fumées avec une solution absorbante de manière à produire des fumées appauvries en CO₂ (2) et une solution chargée en CO₂ (3),
c) on régénère la solution chargée en CO₂ (3) dans une colonne de régénération thermique (RE), de manière à produire une solution absorbante régénérée et un effluent gazeux riche en CO₂ (5),
d) on refroidit ledit effluent gazeux riche en CO₂ de manière à obtenir une fraction gazeuse enrichie en CO₂ qui est évacuée, et une fraction liquide qui est introduite en tête de la colonne de régénération (RE) à titre de reflux (7),
le procédé étant **caractérisé en ce que**, à l'étape d), on effectue l'opération suivante :
i) on réchauffe (E4) ladite fraction liquide par échange de chaleur avec lesdites fumées de combustion.

2. Procédé selon la revendication 1, dans lequel, à l'étape d), on effectue en outre au moins l'une des opérations suivantes :
ii) on refroidit (C1) ledit effluent gazeux à une température intermédiaire de manière à produire un flux liquide et un flux gazeux, puis on sous-refroidit (C2) le flux gazeux de manière à produire ladite fraction gazeuse et ladite fraction liquide, ledit flux liquide et ladite fraction liquide étant rassemblés puis introduits en tête de la colonne de régénération (RE) à titre de reflux (7),
iii) on réchauffe (E3) ladite fraction liquide par échange de chaleur avec ledit effluent gazeux,

3. Procédé selon l'une des revendications 1 et 2 , dans lequel, à l'étape d), on refroidit ledit effluent gazeux à une température comprise entre 10°C et 50°C.

4. Procédé selon la revendication 2, dans lequel, à l'opération ii), on refroidit ledit effluent gazeux à la température intermédiaire comprise entre 40°C et 80°C et on sous-refroidit le flux gazeux à une température comprise entre 10°C et 50°C.

5. Procédé selon l'une des revendications 1 à 4, dans lequel on apporte de la chaleur en fond de la colonne de régénération par un rebouilleur (R).

6. Procédé selon l'une des revendications 1 à 5, dans lequel la solution absorbante comporte de l'eau et des amines.

7. Procédé selon l'une des revendications 1 à 6, dans lequel, avant l'étape b), on refroidit les fumées de combustion par échange de chaleur indirect avec de l'eau de mer.

8. Procédé selon l'une des revendications 1 à 7, dans lequel les fumées de combustion sont produites par une centrale thermique de production d'électricité, un haut-fourneau d'aciérie, un four de cimenterie ou un four de verrerie.

## Claims

1. A method of capturing the CO₂ contained in combustion fumes, wherein at least the following stages are carried out in combination:
a) burning a fuel, thus producing combustion fumes,
b) contacting (AB) the fumes with an absorbent solution so as to produce CO₂-depleted fumes (2) and a CO₂-laden solution (3),
c) regenerating CO₂-laden solution (3) in a thermal regeneration column (RE) so as to produce a regenerated absorbent solution and a CO₂-rich gaseous effluent (5),
d) cooling said CO₂-rich gaseous effluent so as to obtain a CO₂-enriched gas fraction that is discharged and a liquid fraction that is fed to the top of regeneration column (RE) as reflux (7),
the method being **characterized in that**, in stage d), the following operation is carried out :
i) heating (E4) said liquid fraction by heat exchange with said combustion fumes.

2. A method as claimed in claim 1 wherein, in stage d), at least one of the following operations is furthermore carried out:
ii) cooling (C1) said gaseous effluent to an intermediate temperature so as to produce a liquid stream and a gas stream, then subcooling (C2) the gas stream so as to produce said gas fraction and said liquid fraction, said liquid stream and said liquid fraction being combined and fed to the top of regeneration column (RE) as reflux (7),
iii) heating (E3) said liquid fraction by heat exchange with said gaseous effluent.

3. A method as claimed in any one of claims 1 and 2 wherein, in stage d), said gaseous effluent is cooled to a temperature ranging between 10°C and 50°C.

4. A method as claimed in claim 2 wherein, in operation ii), said gaseous effluent is cooled to the intermediate temperature ranging between 40°C and 80°C, and the gas stream is subcooled to a temperature ranging between 10°C and 50°C.

5. A method as claimed in any one of claims 1 to 4, wherein heat is supplied in the bottom of the regeneration column by a reboiler (R).

6. A method as claimed in any one of claims 1 to 5, wherein the absorbent solution comprises water and amines.

7. A method as claimed in any one of claims 1 to 6 wherein, prior to stage b), the combustion fumes are cooled by indirect heat exchange with sea water.

8. A method as claimed in any one of claims 1 to 7, wherein the combustion fumes are produced by a thermal electric power plant, a steel plant furnace, a cement plant kiln or a glass plant furnace.

## Patentansprüche

1. Verfahren zur Abscheidung von CO₂ aus Verbrennungsabgasen, bei welchem mindestens die folgenden Schritte in Kombination durchgeführt werden:
a) Verbrennen eines Brennstoffs unter Erzeugung von Verbrennungsabgasen,
b) Inkontaktbringen (AB) der Abgase mit einer absorbierenden Lösung, sodass Abgase mit verringertem CO₂-Gehalt (2) und eine CO₂-haltige Lösung (3) erzeugt werden.
c) Regenerieren der CO₂-haltigen Lösung (3) in einer thermischen Regenerationskolonne (RE), sodass eine regenerierte absorbierende Lösung und ein CO₂-reicher gasförmiger Stoffstrom (5) erzeugt werden,
d) Kühlen des CO₂-reichen gasförmigen Stoffstroms, sodass eine gasförmige Fraktion erhalten wird, welche an CO₂ angereichert ist und abgeführt wird, und eine flüssige Fraktion, welche am Kopfende der Regenerationskolonne (RE) als Rückfluss (7) eingeleitet wird,
wobei das Verfahren **dadurch gekennzeichnet ist, dass** in Schritt d) der folgende Vorgang durchgeführt wird:
i) Erhitzen (E4) der flüssigen Fraktion durch Wärmeaustausch mit den Verbrennungsabgasen.

2. Verfahren nach Anspruch 1, bei welchem in Schritt d) darüber hinaus mindestens einer der folgenden Vorgänge durchgeführt wird:
ii) Kühlen (C1) des gasförmigen Stoffstroms auf eine Zwischentemperatur, sodass ein flüssiger Strom und ein gasförmiger Strom erzeugt werden, woraufhin der gasförmige Strom derart unterkühlt (C2) wird, dass die gasförmige Fraktion und die flüssige Fraktion erzeugt werden, wobei der flüssige Strom und die flüssige Fraktion vereinigt und anschließend als Rückfluss (7) am Kopfende der Regenerationskolonne (RE) eingeleitet werden,
iii) Erhitzen (E3) der flüssigen Fraktion durch Wärmeaustausch mit dem gasförmigen Stoffstrom.

3. Verfahren nach einem der Ansprüche 1 und 2, bei welchem in Schritt d) der gasförmige Stoffstrom auf eine Temperatur im Bereich von 10°C bis 50°C gekühlt wird.

4. Verfahren nach Anspruch 2, bei welchem im Rahmen des Vorgangs ii) der gasförmige Stoffstrom auf die Zwischentemperatur im Bereich von 40°C bis 80°C abgekühlt und der gasförmige Strom auf eine Temperatur im Bereich von 10°C bis 50°C unterkühlt wird.

5. Verfahren nach einem der Ansprüche 1 bis 4, bei welchem dem Sumpf der Regenerationskolonne mittels eines Erhitzers (R) Wärme zugeführt wird.

6. Verfahren nach einem der Ansprüche 1 bis 5, bei welchem die absorbierende Lösung Wasser und Amine aufweist.

7. Verfahren nach einem der Ansprüche 1 bis 6, bei welchem die Verbrennungsabgase vor dem Schritt b) durch indirekten Wärmeaustausch mit Meerwasser gekühlt werden.

8. Verfahren nach einem der Ansprüche 1 bis 7, bei welchem die Verbrennungsabgase von einem Wärmekraftwerk zur Elektrizitätserzeugung, einem Hochofen der Stahlverhüttung, einem Zementofen oder einem Ofen einer Glashütte erzeugt werden.
